# EUROPEAN PATENT APPLICATION

(11) **EP 3 437 475 A1**
(43) Date of publication of application: **06.02.2019**
(21) Application number: 17773357.3
(22) Date of filing: 01.04.2017
(51) Int. Cl.: A01N 65/00, C09K 15/08, C05F 5/00

(54) **METHOD FOR OBTAINING AN ANTIOXIDANT EXTRACT OF PLANT MATERIAL UNDER BASIC CONDITIONS AND AGRICULTURAL APPLICATIONS**

(30) Priority: 01.04.2016 ES 201630397
(71) Applicant: Biopharma Research S.A., 14540 La Rambla Cordoba (ES)
(72) Inventor: NIETO DEL RÍO, Juean, 14540 La Rambla (Córdoba) (ES)
(74) Representative: Sahuquillo Huerta, Jesús
(86) International application number: PCT/ES2017/070198
(87) International publication number: WO 2017/168030

(57) **Abstract**

The derivation of an antioxidant extract from plant material under basic conditions which presents a great systemic capacity, enabling agricultural applications such as a bio stimulant of plant crops, a reinforcement of the natural defence systems and a means of transport of fertilizers or systemic agrochemicals to the interior of the plant tissue.

## Description

The present invention relates to a method of deriving an antioxidant extract from plant byproducts in alkaline conditions. This extract exhibits a great systemic capacity which enables description of its applications as a biostimulant of agricultural crops, a reinforcement of the natural defense systems and a medium for transport of fertilizers or systemic agrochemicals to the internal tissues of plants.

### Prior art

Plant extracts with antioxidant properties are widely used in bio stimulation formulations for crops because they improve the development of the plants and reinforce their natural resistance in situations of stress. Reactive oxygen species (ROS) are generated in the interior of the chloroplasts in situations of non-biotic stress, such as drought, heat or UV light, for example, or in biotic stress. These molecules are potent oxidative agents and damage the lipids, proteins and DNA in the cells, which could result in causing the death of the organism. In that situation, the activity of the antioxidant compounds comprises sequestration of the free radicals generated, eliminating them and reducing the damage to the vegetative cells.

Given the importance that antioxidant compounds have, numerous methods of preparation of extracts have been developed in pursuit of their antioxidative properties, which differ in respect of the starting raw plant material, the nature of the extract and the extraction conditions.

Many of the methods of preparation of the antioxidant extracts utilize plant material from plant families considered aromatic or plant species, especially of the Umbelliferae or Lamiceae families, although other starting materials have been studied, such as fruit peel or leaves of woody species. For example, ES2177604 patent may be cited, which discloses an antioxidant extraction procedure from plant material, especially the leaves of rosemary, sage, thyme, oregano or cloves, tea or coffee plants, or potato or tomato peel, with alkylene glycol as the extract and at temperatures between 70 and 100°C. The patent WO2001047537 discloses and extraction procedure with an alcohol from previously dried leaves of Olea europea, while the patent US5714150 discloses an extraction process from the leaves of that same species by a hydro-alcoholic maceration and dissolution at temperatures between 20 and 88°C.

Even if alcohols or hydroalcoholic dissolution have always been the most common methods of extracting the antioxidant compounds from the plant material, other solvents such as olive oil, sunflower oil or soybean oil, among others, have been used as solvents (CA2117409 patent), or alkylene glycols (US5795609 patent), buffer solutions with a pH between 7 and 11.5 (US4012531 patent) or successive extractions with nonpolar or polar solvents (ES2031190 patent).

In other cases, the extraction is in a manner similar to that disclosed in the present invention, using aqueous solutions as the extract and with a basic pH. Nevertheless, it was necessary to accompany the alkaline dissolution with other solvents, such as alcohols or nonpolar compounds to obtain the desired degree of extraction. In this respect, patent US4450097 discloses a method of obtaining antioxidants of rosemary with a nonpolar solvent, steam distillation and extraction with an alkaline solution with a pH in excess of 10.5. Likewise, US5209870 patent discloses a process to prepare an alkaline solution with a pH in excess of 8.4 of antioxidant compounds derived from plants of the Laminaceae family (rosemary, sage, thyme), by extraction with an alkaline hydroalcoholic solution with the later elimination of the alcohol.

Even if alkaline conditions are utilized in all of these cases, the pH value at which it is performed is very important, especially when utilizing certain plant materials as the raw material. The reason is that, according to the explanation of Viani in US4012531, certain antioxidant compounds of interest of a phenolic nature have slightly acidic properties, such that these types of compounds are not extracted if the pH rises much above pH10.

In this respect, the present invention has the advantage that the extractant utilized is simply a mixture of water with a strong base which elevates the pH of the mixture and does not require the performance of successive extractions or subsequent concentration to enable the desired concentration of the antioxidant compounds. At the same time, the types of antioxidant compounds extracted can be controlled depending on the pH values of the solution.

On the other hand, it is known that the cellular wall of plants is composed of cellulose and hemicellulose, which are carbohydrate groups, as well as lignin polymers, which forms a three-dimensional configuration which results in networks of lignin-carbohydrates. The most common ranges encountered for the composition of the three polymers varies between 38 and 50% for the cellulose, between 23 and 32% for the hemicellulose, and between 15 and 25% for lignin, and the proportions vary depending on the plant species in question.

Lignin is comprised mainly from three basic phenylpropanoid units, p-coumaryl alcohol, coniferyl alcohol and sinapyl alcohol, which are phenolic compounds with interesting antioxidant activities. The breakdown of the lignin in strongly alkaline conditions gives rise to depolymerization of the structure resulting from the breakage of the C-C bonds and the ether type C-O-C bonds, resulting in different monomeric phenolic type products. Roberts et al., [V.M. Roberts, V. Stein, T. Reiner, A. Lemonidou, X. Li, J.A. Lercher, Towards quantitative catalytic lignin depolymerization, Chem. Eur. J. 17 (2011) 5939-5948] showed that the ether bond rupture of the lignin molecule occurs heterolytically forming a phenolate ion and a carbonium ion that is instantly neutralized by a hydroxyl anion. At first, syringylic units (structures derived from sinapyl alcohol) and guaiacylic units (structures derived from coniferyl alcohol) are derived, but the syringylic type carbonium ions are more stable than the guaiacylic type because they have more substituents to delocalize positive charge, but the syringol is the more stable intermediate in the depolymerization reaction. Subsequently, these monomeric units can undergo dealkylation reactions, demethylation and demethoxylation, depending on the reaction conditions (pressure, temperature, concentration of the basic catalyst and reaction time), resulting in other structures such as phenol, catechol, 4-methylcatechol, p-cresol, m-cresol and o-cresol, all with important antioxidant activity.

In the case of cellulose and hemicellulose, the strongly basic conditions also lead to the depolymerization of its structure. In both cases, reactions like alkaline hydrolysis and terminal depolymerization occur. The first leads to strand breaks which are important depending on the temperature and reaction time, while the terminal depolymerization results in release of monomeric sugar molecules. In this regard, Medina-Vega (US5352264 patent) discloses a process of hydrolysis of the hemicellulose from rice husks or oat hulls but achieved in acidic conditions with the addition of nitric acid.

### Description of the invention

The present invention describes a process of extraction in a basic medium which, depending on the conditions used, may facilitate the extraction of other antioxidant compounds present in the starting plant material or enhance the breaking of the bonds in lignin, cellulose and hemicellulose and depolymerization reactions of these structures.

The present invention enables the derivation of an antioxidant extract by extraction and hydrolysis using basic catalysis of plant material from agricultural byproducts. The invention fundamentally includes a process of extraction of the antioxidant compounds naturally present in the plant material, facilitated by appropriate conditions of pH, temperature and pressure. At the same time, the reaction conditions and catalysis by strong bases favor the hydrolysis processes of lignin which forms the cell walls of the byproducts used. These reactions result in the breaking of the bonds between lignin and carbohydrates, as well as a subsequent depolymerization of lignin to low molecular weight compounds with high antioxidant activity, such as phenol, catechol, guaiacol or syringol, among others.

It has been found that the extract obtained by this extraction method acts as a bioestimulant of agricultural crops and has very important characteristics of rapid availability to plants, favoring systemic characteristics through the roots, leaves or stems, and facilitates the entry of other types of products used in agriculture such as fertilizers, fungicides or herbicides, among others. Therefore, the extract can be used as an agricultural biostimulant, whether alone or as part of the functions of nutritional formulations, plant biostimulants and/or agrochemical.

The present invention comprises a step of extracting the compounds of interest from the plant material and a step of hydrolysis in basic media of plant polymers present therein. Depending on the objectives in each case, either one of these two phases can be enhanced by controlling the reaction conditions, particularly the pH of the extraction medium.

Plant material products which are considered as waste in most food processing industries, such as straw, stalks, leaves and / or garden waste, are introduced into a stainless-steel reactor.

Then, depending on the process to be promoted, extraction of antioxidants or lignin depolymerization is progressed by adding water and a strong basic catalyst, preferably sodium or potassium hydroxide, in a solid to liquid ratio of from 1: 5 to 1:20.

The reactor is subjected to temperature conditions between 15 and 150°C, and pressure between 1 and 3 bar for a time which varies depending on the agricultural byproduct used. Preferably, the extraction duration is between 10 and 120 hours. In the case that the ambient temperature and atmospheric pressure is used, the extraction time will be longer.

The extraction of antioxidant compounds of different chemical properties from the plant material used occurs during this time, including compounds of the families of terpene acids, flavonoids, secoiridoids, simple phenols and phenolic acids occur. While the depolymerization of lignin present in the basic medium is effected by breaking ether bonds of the β-O-4 type, to give compounds of increasingly lower molecular weight down to monomers or dimers of phenols, such as catechol, guaiacol, 4-methycatechol, phenol, cresol or syringol, among others. The concentration ratio between the major chemical families in the final extract depends on the nature of the plant material used and the plant species from which they have been obtained.

After completing the above steps, the reaction mixture is filtered and the solid residues are discarded. The liquid extract is allowed to stand prior to further use.

The applications for the extract obtained by the foregoing description comprise various applications in agriculture, with either directly diluted treatment broths or as part of other formulations with nutritional activity, biostimulant activity and/or agrochemical activity.

The extracts or formulations thereby obtained can be applied by foliar or irrigation methods to any crop. The different objectives of the applications are described below.

### Application as a vegetative biostimulant

The plant extract obtained can be used as a plant biostimulant because the high antioxidant concentration present therein aids fluidizing the sap, providing consequently higher flux thereof and higher production capacity throughout the [growth] cycle.

When the plant extract enters into the phloem of the plant, it generates a charge differential inside the duct, achieving increased sap flux and therefore more rapid movement thereof in the plant.

Additionally, the high antioxidant capacity conferred by the compounds present in the plant extract (terpene acids, flavonoids, secoiridoids, simple phenols and / or phenolic acids), results in a rapidly invigorated crop, and externally results in increased photosynthetic capacity, which translates into greater vegetative growth, increased flowering and accelerated ripening, in addition to a more balanced filling and greater uniformity in the fruits, together with an increased specific gravity thereof through increased plant efficiency during the cycle. The result is less aging of the plants which, in the case of seasonal crops which are not multiyear plants, enables extension of the cultivation time, increasing the production period of each plant to several months.

In addition, the high antioxidant capacity of the extract generates an important effect of cleaning and disinfecting the plant, reducing the problems of vascular infections which impede sap translocation.

At the same time, another object of the present invention is the addition of other compounds to the described extract with a tonic function, such as various types of vitamins or amino acids, in any proportion.

### Application as reinforcement to plant defense systems

Thanks to the presence of antioxidant compounds of the formulation, reinforcement is achieved in the defense systems of plants against different types of biotic stress (pathogens, insects, nematodes or interactions with parasitic plants, among others) and abiotic stress (temperature, drought, light or environmental pollution, etc.). This is because these antioxidant compounds inhibit the generation of reactive oxygen species (ROS) such as hydroxyl radicals, superoxide radicals and hydrogen peroxide, thus decreasing their levels when these reactive oxygen species are formed.

The accumulation of these reactive oxygen species in any organism results in accelerated aging thereof. In the case of plants, this accelerated aging results in a faster withering of the plant, making it increasingly sensitive to external agents because they are responsible for the two types of stress mentioned above. The application of the proposed formulation provides antioxidant compounds that enter the sap and help enhance the defence mechanisms of the plant and make it more resistant to external attack by natural synthesis of natural phytoalexins.

### Applications for the transport of other nutrients

The observed systemic capacity of the extract which is the object of the present invention allows the use thereof as a means of transport of nutrients into plants. Thus, formulations are enabled comprising the plant extract in different percentages, along with other essential nutrients for plants, such as nitrogen, phosphate, potassium and / or microelements. Moreover, it also enables the preparation of different formulations with the above characteristics at the time of field application.

Given the high capacity that the plant extract described provides to these formulations for forming polar bonds and improved systemics through roots, leaves or stem, the utilization of nutrients is much higher compared to traditional fertilizers, while reducing the fertilizer dosage units per unit of culture.

Thanks to the better utilization of nutrients, the use of the formulations described results in greater vegetative activity and increased photosynthetic activity, resulting in acceleration of each crop and advancing the date of harvesting of the crop. In turn, most vegetative activity leads to greater vigor and longevity of the plant, generating increased production.

### Application as a carrier of phytosanitary treatments

Phytosanitary treatments are virtually essential in agriculture to control pests and diseases. Currently, the foundation of the phytosanitary protection is chemical control, which is based on the use of synthetic chemicals to control plant pathogens. However, the lack of knowledge of the mode of action of some of these chemicals, the problems of pollution and waste on land, water or air, and the negative effects produced on the health of consumers results in evermore efforts to lower the dosage of these treatments.

The use of the plant extract which is the object of the present invention enables a substantial lowering of the dose of systemic phytosanitary treatments, such as fungicides or herbicides, because it acts to aid the transportation of active substances to the interior of the plant. Thus, increased utilization of the product to very high percentages is enabled and consequently decreased dosage to achieve the same effects. In turn, more sustainable management and a decrease in treatment costs is achieved. Moreover, this decreased dosage minimizes much of the phytotoxic effects which the agrochemicals have on the plants, such that the activity of the crop is not adversely affected after treatment, resulting in better final product results.

All of this is in accordance with the claims accompanying the present specification and are incorporated herein by reference. Specific or preferred embodiments of the invention are indicated in the dependent claims which also are incorporated herein by reference thereto.

Throughout the description and claims, the word "comprises" and its variants are not intended to exclude other technical features, additives, components or steps. To those skilled in the art, other objects, advantages and features of the invention will emerge partly from the description and partly from the practice of the invention. The following examples and drawings are provided by way of illustration and not intended to restrict the present invention. Furthermore, the present invention covers all possible combinations of particular and preferred embodiments set forth herein.

### Brief description of the drawings

Next, a brief description is provided of a figure which helps to better understand the invention, and which is expressly related to an embodiment of said invention presented as a non-limiting example thereof.

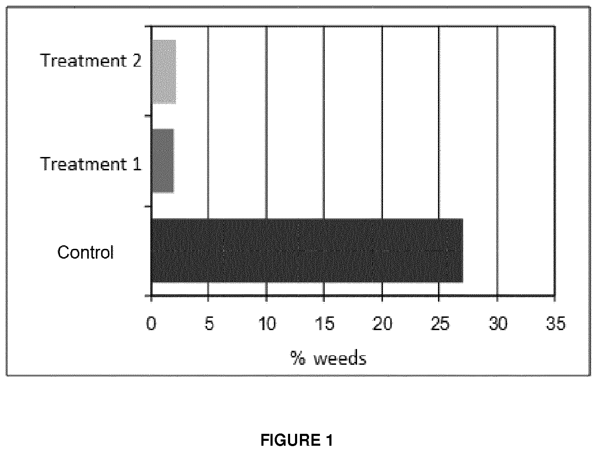

**Figure 1****.** Percentage of weeds (Anadenanthera peregrina, also known as yopo, jopo, cohoba, parica or calcium tree) in untreated broad beans (control), after treatment with glyphosate (150 cc / ha) (Treatment 1) and after treatment with glyphosate (80 cc / ha) and extract (Treatment 2)

### Detailed description of the invention and examples.

To demonstrate the various applications described with the derived antioxidant extract, various tests were conducted with different objectives.

### Test 1. Increase and acceleration of tomato production.

This first test was carried out in order to quantitatively measure the increase in crop production due to treatment with the extract of the present invention as well as the impact on the development of the crop.

The trial was performed in a crop of greenhouse Roma tomatoes in which two study plots, a plot subjected to two treatments with the extract and the untreated control plot on a second plot during the season.

The vegetative growth of the plants was studied throughout the crop cycle and advancement of all phenological stages were observed in the plot treated with the extract compared to the control plot. At the end of the study, an advance of 7 days at the time of harvest of the treated crop was quantified, which adds to the production value since the first collections of these fruits have a higher price in the market.

In parallel, the production of fruit produced by each of the two crops was studied based on three specific parameters: the mean number of kilograms of fruit produced by each plant, productivity as measured by the mean number of fruits collected from each plant, and the mean weight in grams of each fruit. The results obtained are shown in Table 1.

**Table 1. Crop production (Kg/plant), productivity (fruits/plant) and the weight of the fruits (g/fruit) were compared in plots of Roma tomatoes without treatment (control) and treated with the extract (treated).**

| | **Production (Kg/plant)** | **Productivity (fruit/plant)** | **Mean weight (g/fruit)** |
|---|---|---|---|
| **Control** | 0.36 | 6.85 | 52.54 |
| **Treated** | 0.43 | 7.71 | 55.25 |
| **% variation** | 19 | 13 | 5 |

It can be seen that treatment with the proposed extract increased crop production in the three parameters studied. Productivity for each of the sampled plants was increased both in number of fruits and Kilograms of the fruit obtained. In addition, the fruits harvested from the plot treated with the extract had a higher weight compared to those in the control plot.

### Test 2. Improved production and organoleptic characteristics of oranges.

This test was carried out by treating an orange grove of the navelina variety with a formulation containing the plant extract, in addition to sources of organic carbon and nitrogen, and an aqueous solution of vegetable amino acids. The treatment was applied before sprouting, leaving some trees as untreated controls.

Improvements was measured in the production of orange depending on the number of fruits per tree, the mean fruit weight and the weight in the harvested oranges, and the results are shown in Table 2. In addition, various parameters were measured as indicators of the quality of the oranges such as percentage of peel, sugar content and acidity (Table 3).

**Table 2. Production mean weight and specific gravity of oranges from untreated trees (control) and from trees treated with the proposed formulation (treated).**

| | **Production (fruit/tree)** | **Mean weight (g/fruit)** | **Specific density (g/cc)** |
|---|---|---|---|
| **Control** | 630 | 248 | 0.099 |
| **Treated** | 680 | 283 | 0.124 |
| **% Variation** | 8 | 14 | 25 |

**Table 3. Mean peel, sugar and acidity from oranges from untreated trees (control) and from trees treated with the proposed formulation (treated).**

| | **Peel (%)** | **Sugar Degrees Brix (°Bx)** | **Acidity (g citrate/100 mL)** |
|---|---|---|---|
| **Control** | 51.4 | 11.1 | 0.8 |
| **Treated** | 54.5 | 12.7 | 1.0 |
| **% Variation** | 6 | 14 | 25 |

The application of the treatment with the formulation containing the extract increased vegetative production of fruit per tree by 8% and the average fruit weight by 14%.

Moreover, the calibre of the oranges harvested in both plots was similar, 4 gauge (equatorial diameter and 77- 88 mm) according to the Codex Standard for oranges (CODEX STAN 245-2004), and yet the specific gravity of fruits from the treated plot had a specific weight 25% higher than the control plot. This result indicates that the fruit filling was more efficient with the application of the extract which is the object of the present invention.

According to the results of Table 3, an increase can be seen in the percentage of fruit peel of 6%, which could be related to an improvement in the formation of cell walls of the flavedo and the albedo of the oranges. Also, the application of the proposed formulation resulted in a 14% increase in the sugar content and a 25% increase in the acidity of oranges, and both parameters are important from an organoleptic point of view, as an indicator of quality of this type of fruits.

### 3. Test Catalyst (carrier) of phytosanitary treatments

Given the high systemics of the extract described in the present invention, a trial was performed where this feature was used to reduce the dose of agrochemicals applied to crops, such as systemic herbicides or fungicides. Furthermore, the paralysis of the crop by the effects of the agrochemical is avoided by decreasing said dose.

The study was carried out to control the percentage of weeds (Anadenanthera peregrina, also known as yopo, jopo, cohoba, parica or calcium tree) on broad beans. Two treatments were trialed, a first treatment with commercial herbicide (glyphosate) at a dose of 150 cc / ha, and a second treatment with the same commercial herbicide at a lower dose (80 ml / ha) mixed with the extract described herein were tested. The two trials were compared with a control without any treatment.

The percentage of weeds in the area used as the control and the two treated areas are shown in Figure 1. It can be seen that the application of commercial herbicide in one treatment controlled a significant percentage of the existing weeds. However, the percentage control was similar when the same herbicide was applied at half the dosage but combined with the extract of the present invention.

These results demonstrate that the extract can be used as a catalyst and carrier for agrochemicals, reducing the dose of the latter while achieving similar results in weed control.

## Claims

1. A method of derivation of an extract of plant material for use in agricultural formulations which comprises: **(a)** an extraction step in basic media of antioxidant compounds of the families of terpene acids, flavonoids, secoiridoids, simple phenols and/or phenolic acids; and **(b)** a hydrolysis step in basic media of lignin polymers to derive monomers or dimers of phenols.

2. The method of derivation of an extract according to claim 1 wherein the plant material utilized are by-products of the agri-food industry selected from among: straw, stems, leaves and/or prunings and/or a combination thereof.

3. The method of derivation of an extract according to any one of claims 1 or 2 wherein a strong base diluted in water is used as a catalyst, and where said base is selected from among sodium, potassium or an equivalent thereof.

4. The method of derivation of an extract according to any one of claims 1 to 3, wherein the ratio between plant material and liquid is comprised between 1:5 and 1:20.

5. The method of derivation of an extract according to any one of claims 1 to 4 wherein the temperature is maintained between 15 and 150ºC.

6. The method of derivation of an extract according to any one of claims 1 to 4, wherein the pressure is maintained between 1 and 3 bar.

7. The method of derivation of an extract according to any one of claims 1 to 4 wherein the extraction time will be comprised between 10 and 120 hours.

8. The use of an extract derived according to any one of claims 1 to 7 as a plant bio stimulant which assists the flux of the sap and increases the flux capacity and improves the productive capacity of the crops.

9. The use of an extract derived according to any one of claims 1 to 7 as a reinforcement of the plant defence systems in respect of biotic or abiotic stress, which helps to prevent and reduce reactive oxygen species.

10. The use of an extract derived according to any one of claims 1 to 7 as a transport for other nutrients to the interior of the plant, which assists the introduction via the roots, leaves or stems of nitrogen, phosphate, potassium fertilizers and/or microelements.

11. The use of an extract derived according to any one of claims 1 to 7 as a carrier of systemic phytosanitary treatments, which aids the transport of the active substances to the interior of the plant enabling a reduction of the dosage of phytosanitary products and reducing the phytotoxic effects.
